# FASCICULE DE BREVET EUROPEEN

(11) **EP 2 048 337 B1**
(45) Date de publication et mention de la délivrance du brevet: **26.06.2013**
(21) Numéro de dépôt: 08166348.6
(22) Date de dépôt: 10.10.2008
(51) Int. Cl.: F02C 7/236, F02C 7/232

(54) **Circuit d'alimentation en carburant d'un moteur d'aéronef**
Kraftstoffzuführkreislauf eines Luftfahrzeugmotors
Fuel supply circuit for an aircraft engine

(30) Priorité: 12.10.2007 FR 0758246
(43) Date de publication de la demande: 15.04.2009
(73) Titulaire: SNECMA, 75015 Paris (FR)
(72) Inventeur: Galozio, Philippe, 77127 Lieusaint (FR); Montarou, Cédric, 94100 Saint Maur (FR); Morin, Denis, 94100 Saint Maur des Fosses (FR)
(74) Mandataire: Joly, Jean-Jacques

(56) Documents cités:
- EP-A- 1 018 598
- US-A1- 2002 184 885
- US-A1- 2004 011 052
- US-B1- 6 487 847

## Description

### Arrière-plan de l'invention

L'invention concerne un circuit d'alimentation en carburant d'un moteur d'aéronef, et plus particulièrement un circuit délivrant du carburant pour l'alimentation d'injecteurs de chambre de combustion du moteur et pour utilisation comme fluide hydraulique pour la commande d'actionneurs de géométries variables du moteur.

Le plus souvent le circuit d'alimentation en carburant comprend une pompe haute pression sous forme de pompe volumétrique à engrenages entraînée par le moteur via une boîte de transmission ou boîte de relais d'accessoires ou AGB ("Accessories Gear Box"). Un tel circuit est décrit dans US 2004/0011052. Le débit délivré par la pompe n'est pas adapté au besoin réel du moteur et excède celui-ci sur une large plage de régime de rotation du moteur. Il est donc nécessaire d'ajouter en sortie de la pompe haute pression un équipement de dosage du carburant envoyé dans la chambre de combustion.

Il est connu aussi d'utiliser comme pompe haute pression une pompe à débit variable commandé par un module de régulation électronique du moteur, ce qui permet plus facilement d'adapter le débit délivré au besoin du moteur.

Dans l'un et l'autre cas, la commande d'un actionneur hydraulique de géométrie variable du moteur est réalisée par servo-vanne ayant une entrée d'admission haute pression reliée à la sortie de la pompe et une sortie d'échappement basse pression reliée à une ligne d'alimentation en carburant à basse pression en amont de la pompe.

Lorsqu'un mouvement brusque d'une géométrie variable est commandé, le prélèvement en sortie de la pompe haute pression se traduit par une perturbation sur l'alimentation des injecteurs. La perturbation est d'autant plus importante que la dynamique de l'équipement de dosage ou de l'ensemble pompe à débit variable et module de régulation électronique est faible. Il convient de minimiser autant que possible cette perturbation car, sinon, elle peut entraîner des dysfonctionnements du moteur dans certaines conditions de vol, tels que pompage et extinction du moteur.

### Objet et résumé de l'invention

L'invention a pour but de proposer un circuit d'alimentation en carburant d'un moteur d'aéronef permettant, de façon très simple, d'empêcher que le mouvement brusque d'une géométrie variable se traduise par une perturbation sensible du débit de carburant délivré aux injecteurs.

Ce but est atteint grâce à un circuit d'alimentation en carburant d'un moteur d'aéronef, comprenant une pompe délivrant du carburant sous haute pression sur une sortie de la pompe, une conduite d'alimentation en carburant d'injecteurs de chambre de combustion reliée à la sortie de la pompe et au moins une servo-vanne de commande d'actionneur hydraulique de géométrie variable du moteur, circuit dans lequel un élément de perte de charge est interposé entre la sortie de la pompe et la conduite d'alimentation d'injecteurs, et la servo-vanne a une entrée d'admission reliée à la sortie de la pompe en amont de l'élément de perte de charge et une sortie d'échappement reliée à la conduite d'alimentation d'injecteurs en aval de l'élément de perte de charge.

Ainsi, le débit prélevé à la sortie de la pompe haute pression, en amont de l'élément de perte de charge, pour commander le déplacement d'un actionneur hydraulique est sensiblement compensé par le débit réinjecté en aval de l'élément de perte de charge.

L'élément de perte de charge peut être constitué par un mécanisme assurant une régulation de la perte de charge.

La perte de charge constitue la différence de pression permettant de commander un actionneur. Un compromis est à rechercher entre cette perte de charge, qui doit de préférence être aussi réduite que possible, et la géométrie des actionneurs. En effet, pour un effort à produire, plus la perte de charge est élevée et plus la taille de l'actionneur peut être réduite. Une valeur de perte de charge comprise par exemple entre 10 bars et 40 bars permet de satisfaire une majorité d'exigences, mais peut, dans certains cas, être choisie en dehors de cette plage.

### Brève description des dessins

L'invention sera mieux comprise à la lecture de la description faite ci-après en référence aux dessins annexés dans lesquels :
- la figure 1 illustre de façon très schématique un mode de réalisation d'un circuit d'alimentation en carburant conforme à l'invention ; et
- la figure 2 est une vue schématique en coupe d'un mode de réalisation d'un clapet de régulation de perte de charge faisant partie du circuit de la figure 1.

### Description détaillée

Un mode de réalisation d'un circuit d'alimentation en carburant conforme à l'invention est ci-après décrit dans le cadre d'une application à un moteur d'avion à turbine à gaz. Toutefois le domaine d'application de l'invention s'étend à des moteurs à turbine à gaz d'autres aéronefs, notamment des hélicoptères et à des moteurs d'aéronefs autres qu'à turbine à gaz.

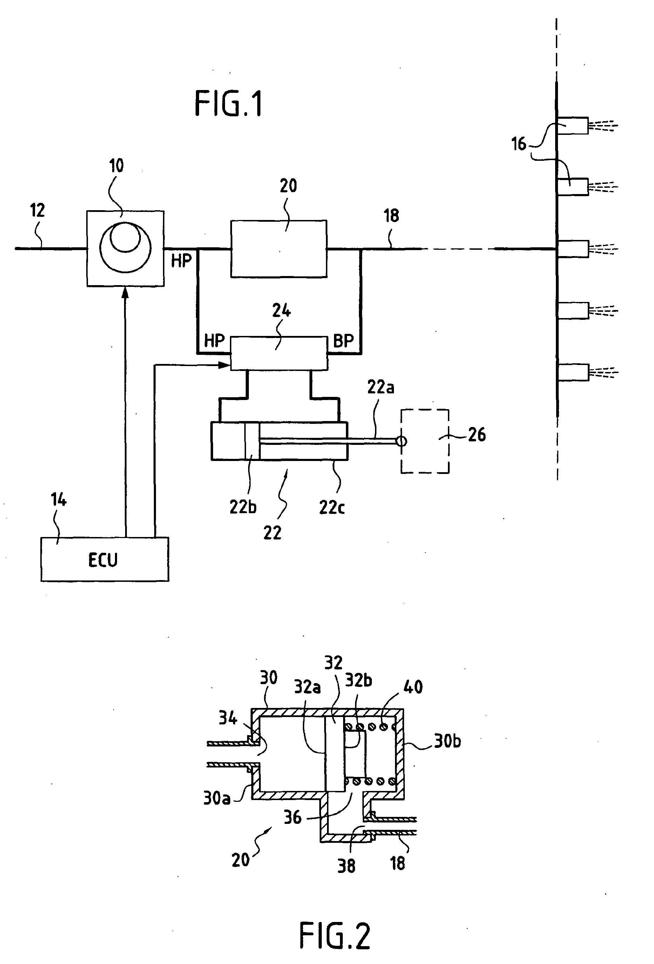

Sur la figure 1, la référence 10 désigne une pompe haute pression à débit variable dont l'entrée est reliée à une ligne 12 d'alimentation en carburant basse pression, par exemple une ligne reliée à une sortie d'une pompe basse pression (non représentée). Le débit de la pompe 10 est commandé par un module 14 de régulation électronique du moteur ou ECU ("Electronic Control Unit") de façon bien connue en soi, pour adapter le débit au besoin du moteur.

Des injecteurs de carburant 16 d'une chambre de combustion du moteur sont alimentés par une conduite d'alimentation 18. La sortie haute pression (HP) de la pompe 10 est reliée à la conduite 18 par l'intermédiaire d'un élément de perte de charge 20.

Un ou chacun de plusieurs actionneurs hydrauliques 22 (un seul est représenté sur la figure) est commandé par une servo-vanne électro-hydraulique respective 24 pour déplacer une géométrie variable respective du moteur. L'actionneur 22 est ici sous forme d'un vérin dont la tige 22a est reliée mécaniquement à la géométrie variable à commander (schématisée par 26). La géométrie variable peut par exemple être un anneau de commande d'angle de calage d'aubes stator à calage variable VSV ("Variable Stator Vanes"), à savoir des aubes d'étages redresseurs de compresseur du moteur à turbine à gaz, ou une vanne de décharge ajustable de compresseur VBV ("Variable Bleed Valve") ou une vanne de décharge transitoire de compresseur TBV ("Transcient Bleed Valve") ou une vanne de réglage de débit d'air pour un système de réglage de jeu au sommet d'aubes de rotor pour turbine basse pression ou turbine haute pression LPTACC ("Low Pressure Turbine Active Clearance Control") ou HPTACC ("High Pressure Turbine Active Clearance Control").

La servo-vanne 24 a une entrée ou orifice d'admission haute pression (HP) relié à la sortie de la pompe 10, en amont de l'élément de perte de charge 20, une sortie ou orifice d'échappement basse pression (BP) relié à la conduite 18 en aval de l'élément de perte de charge 20 et des orifices d'utilisation reliés aux chambres du cylindre 22c du vérin 22, de part et d'autre du piston 22b.

Lorsqu'un déplacement de la géométrie variable doit être réalisé, la servo-vanne 24 est commandée par le module de régulation électronique 14 pour mettre en communication l'une des chambres du vérin 22 avec l'entrée d'admission HP et l'autre chambre du vérin 22 avec la sortie d'échappement BP. Le débit de la chambre qui augmente de volume est prélevé en amont de l'élément de perte de charge 20 tandis que le débit de la chambre qui diminue de volume est réinjecté en aval de l'élément de perte de charge. La différence entre débit prélevé et débit réinjecté est minime, due essentiellement à la variation du volume de la tige 22a dans le cylindre 22c du vérin. Ainsi, un prélèvement brusque en sortie de la pompe haute pression pour le déplacement d'une géométrie variable ne se traduit pas par une perturbation sensible du débit dans la conduite 18 d'alimentation des injecteurs.

Ce résultat est obtenu de façon particulièrement simple par la présence de l'élément de perte de charge 20. Une augmentation de la pression en sortie de la pompe 10 est toutefois requise pour tenir compte de la perte de charge imposée par l'élément 20. Cela ne soulève pas de difficulté technologique puisque les pompes haute pression couramment utilisées des circuits d'alimentation de moteur d'aéronef en carburant pouvant facilement délivrer un surcroît de pression de une à quelques dizaines de bars. On notera qu'une perte de charge relativement faible peut être choisie dans la mesure où le diamètre du piston 22b est suffisant pour actionner la géométrie variable par la différence de pression correspondant à la perte de charge. Dans une majorité de cas, une perte de charge comprise entre 10 bars et 40 bars doit pouvoir satisfaire les besoins.

Différentes formes de réalisation de l'élément de perte de charge 20 pourront être choisies.

Ainsi, l'élément de perte de charge 20 peut être simplement sous la forme d'un diaphragme.

Avantageusement toutefois, on utilise un mécanisme permettant la régulation de la perte de charge à une valeur donnée, ce qui permet de maintenir une différence de pression sensiblement constante entre les orifices d'admission et d'échappement de la servo-vanne. Cela facilite le dimensionnement mécanique de l'ensemble servo-vanne et actionneur ainsi que la mise au point de la boucle locale de commande.

La figure 2 montre de façon simplifiée un clapet assurant la fonction de régulation de perte de charge à une valeur sensiblement constante.

Le clapet 20 comprend un cylindre 30 dans lequel est monté un piston 32. A une extrémité, le cylindre présente une ouverture d'entrée haute pression 34 (HP) reliée à la sortie de la pompe 10. Le piston 32 est mobile axialement dans le cylindre 30, la position du piston 32 déterminant la section de passage à travers une lumière 36 formée dans la paroi latérale du cylindre 30 et raccordée à la conduite 18 par une sortie basse pression BP 38. Le piston 32 a une face avant 32a en regard de la paroi d'extrémité 30a du cylindre dans laquelle l'ouverture d'entrée HP 34 est formée, et une face arrière 32b contre laquelle un ressort 40 exerce une force de rappel élastique, le ressort étant disposé entre le piston 32 et la paroi d'extrémité 30b du cylindre opposée à la paroi 30a.

Lorsque la différence entre la pression à l'entrée HP 34 et la pression à la sortie BP 38 augmente, le piston 32 se déplace à l'encontre de la force de rappel du ressort 40, ce qui augmente la section de passage dans la lumière 38 et réduit la perte de charge.

Inversement, lorsque la différence entre la pression à l'entrée HP 34 et la pression à la sortie BP 38 diminue, le piston 32 est repoussé par le ressort 40, ce qui réduit la section de passage à travers la lumière 36 et augmente la perte de charge.

La valeur de la perte de charge est déterminée par le tarage du ressort 40.

Bien que l'on ait décrit ci-avant un circuit d'alimentation en carburant utilisant une pompe haute pression à débit variable, l'invention est aussi applicable à des circuits utilisant une pompe haute pression d'un autre type, notamment une pompe à cylindrée fixe non pilotée par l'ECU telle qu'une pompe volumétrique à engrenages entraînée par une AGB. Un équipement de dosage est alors inséré sur la conduite d'alimentation en carburant, en aval du raccordement de la sortie d'échappement de la servo-vanne.

## Revendications

1. Circuit d'alimentation en carburant d'un moteur d'aéronef, comprenant une pompe (10) délivrant du carburant sous haute pression sur une sortie de la pompe, une conduite (18) d'alimentation en carburant d'injecteurs de chambre de combustion reliée à la sortie de la pompe et au moins une servo-vanne (24) de commande d'actionneur hydraulique (22) de géométrie variable du moteur,
**caractérisé en ce qu'**un élément de perte de charge (20) est interposé entre la sortie de la pompe (10) et la conduite (18) d'alimentation d'injecteurs, et la servo-vanne (24) a une entrée d'admission haute pression reliée à la sortie de la pompe en amont de l'élément de perte de charge et une sortie (BP) d'échappement basse pression reliée à la conduite d'alimentation d'injecteurs en aval de l'élément de perte de charge.

2. Circuit selon la revendication 1, **caractérisé en ce que** l'élément de perte de charge (20) est un mécanisme permettant une régulation de la perte de charge.

3. Circuit selon la revendication 1, **caractérisé en ce que** l'élément de perte de charge comprend un diaphragme.

4. Circuit selon l'une quelconque des revendications 1 à 3, **caractérisé en ce que** l'élément de perte de charge est dimensionné pour engendrer une perte de charge comprise entre 10 bars et 40 bars.

5. Moteur d'aéronef comportant un circuit d'alimentation en carburant selon l'une quelconque des revendications 1 à 4.

## Patentansprüche

1. Treibstoffzuführkreis eines Flugzeugtriebwerks, umfassend eine Pumpe (10), die an einem Ausgang der Pumpe unter hohem Druck stehenden Treibstoff liefert, eine Leitung (18) zur Treibstoffversorgung von Brennkammereinspritzdüsen, welche mit dem Ausgang der Pumpe verbunden ist, sowie wenigstens ein Servoventil (24) zum Steuern eines hydraulischen Aktors (22) mit veränderlicher Geometrie des Triebwerks,
**dadurch gekennzeichnet, daß** ein Druckabfallelement (20) zwischen dem Ausgang der Pumpe (10) und der Leitung (18) zur Versorgung von Einspritzdüsen zwischengeschaltet ist und das Servoventil (24) einen Hochdruckzuführeingang, der vor dem Druckabfallelement mit dem Ausgang der Pumpe verbunden ist, sowie einen Niederdruckablaßausgang (BP) aufweist, der nach dem Druckabfallelement mit der Einspritzdüsenversorgungsleitung verbunden ist.

2. Kreis nach Anspruch 1, **dadurch gekennzeichnet, daß** das Druckabfallelement (20) ein Mechanismus ist, der eine Regelung des Druckabfalls ermöglicht.

3. Kreis nach Anspruch 1, **dadurch gekennzeichnet, daß** das Druckabfallelement eine Drossel umfaßt.

4. Kreis nach einem der Ansprüche 1 bis 3, **dadurch gekennzeichnet, daß** das Druckabfallelement dafür dimensioniert ist, einen Druckabfall im Bereich zwischen 10 bar und 40 bar zu erzeugen.

5. Flugzeugtriebwerk, umfassend einen Treibstoffzuführkreis nach einem der Ansprüche 1 bis 4.

## Claims

1. A fuel feed circuit for an aircraft engine, the circuit comprising a pump (10) delivering fuel under high pressure to a pump outlet, a pipe (18) for feeding fuel to combustion chamber injectors and connected to the pump outlet, and at least one servo-valve (24) for controlling a hydraulic actuator (22) of a variable-geometry component of the engine,
wherein a head loss element (20) is interposed between the pump (10) outlet and the injector feed pipe (18), and the servo-valve (24) has a high pressure admission inlet connected to the outlet from the pump upstream from the head loss element and a low pressure exhaust outlet (BP) connected to the injector feed pipe downstream from the head loss element.

2. A circuit according to claim 1, wherein the head loss element (20) is a mechanism enabling head loss to be regulated.

3. A circuit according to claim 1, wherein the head loss element comprises a diaphragm.

4. A circuit according to claim 1, wherein the head loss element is dimensioned to generate a head loss lying in the range 10 bars to 40 bars.

5. An aircraft engine including a fuel feed circuit according to claim 1.
